# EUROPÄISCHE PATENTSCHRIFT

(11) **EP 2 872 402 B1**
(45) Veröffentlichungstag und Bekanntmachung des Hinweises auf die Patenterteilung: **01.03.2017**
(21) Anmeldenummer: 13727846.1
(22) Anmeldetag: 03.06.2013
(51) Int. Cl.: B65B 3/00, B65B 3/26, B67C 3/28, G01F 23/292

(54) **VORRICHTUNG ZUM BEFÜLLEN VON BEHÄLTNISSEN**
ARRANGEMENT FOR FILLING CONTAINERS
DISPOSITIF DE REMPLISSAGE DE RÉCIPIENTS

(30) Priorität: 16.07.2012 DE 102012212398; 12.04.2013 DE 102013206543
(43) Veröffentlichungstag der Anmeldung: 20.05.2015
(73) Patentinhaber: Robert Bosch GmbH, 70442 Stuttgart (DE)
(72) Erfinder: KRAUSS, Ulrich, 74532 Ilshofen (DE); RACZEK, David, 74564 Crailsheim (DE); BRAEUNINGER, Marc, 74589 Satteldorf (DE)
(86) Internationale Anmeldenummer: PCT/EP2013/061337
(87) Internationale Veröffentlichungsnummer: WO 2014/012697

(56) Entgegenhaltungen:
- DE-A1-102006 019 518
- DE-A1-102010 000 034
- DE-U1- 9 417 615
- US-A- 4 163 200
- US-A1- 2009 103 109
- US-B1- 6 625 194

## Beschreibung

### Stand der Technik

Die Erfindung betrifft eine Vorrichtung zum Befüllen von Behältnissen nach dem Oberbegriff des Anspruchs 1.

Eine derartige Vorrichtung ist aus der DE 10 2006 019 518 A1 der Anmelderin bekannt. Die bekannte Vorrichtung umfasst eine Dosiereinrichtung mit einer heb- und senkbaren Füllnadel, mit deren Hilfe ein flüssiges Pharmazeutika in ein Behältnis, wie ein Vial oder eine Ampulle, eindosiert wird. Die Dosiereinrichtung wirkt mit einer Kontrolleinrichtung zusammen, die einen von einer Laserstrahleinrichtung erzeugten Laserstrahl umfasst, der mit der Längsachse des Behältnisses ausgerichtet ist und das Behältnis in Höhe des Halses des Behältnisses durchstrahlt. Der Laserstrahl wird beim Durchdringen des Behältnisses in Abhängigkeit davon, ob sich der Füllpegel in Höhe des Laserstrahls befindet oder nicht unterschiedlich stark abgelenkt bzw. gebrochen. Auf der dem Eintrittsbereich des Laserstrahls gegenüberliegenden Seite des Behältnisses befinden sich zwei Sensoreinrichtungen, die in Abhängigkeit von der Brechung des Laserstrahls am Behältnis den Laserstrahl erfassen und ein Signal an eine Steuereinrichtung abgeben. Überschreitet der Füllpegel das Niveau des Laserstrahls, so wird das von der zugeordneten Sensoreinrichtung erfasste Signal der Steuereinrichtung der Dosiereinrichtung zugeleitet, die daraufhin den Füllvorgang stoppt. Nachteilig dabei ist, dass es durch die Verwendung eines einen relativ geringen Durchmesser aufweisenden Laserstrahls erforderlich ist, die Längsachse des Behältnisses relativ genau zum Laserstrahl auszurichten, damit die Brechung des Laserstrahls am Behältnis von den Sensoreinrichtung zuverlässig und fehlerfrei erfasst werden kann. Dadurch benötigt die Kontrolleinrichtung eine zusätzliche Einstelleinrichtung zur Ausrichtung des Laserstrahls mit der Längsachse des Behältnisses. Darüber hinaus ist das Signal des Laserstrahls von der Qualität des Behältnisses insofern abhängig, als dass beispielsweise Lunkerstellen im Glas, Kratzer oder Ungleichmäßigkeiten auf der Oberfläche des Behältnisses usw. die Qualität des Messsignales beeinflussen. Auch wird als nachteilhaft angesehen, dass infolge der unterschiedlichen Brechung des Laserstrahls beim Durchgang durch das Behältnis die beiden Sensoreinrichtungen nebeneinander angeordnet werden müssen und somit bei einer Einrichtung, bei der gleichzeitig mehrere Behältnisse überprüft werden sollen, ein relativ großer Teilungsabstand zwischen den Behältnissen erforderlich ist. Zuletzt ist auch die Notwendigkeit, für jedes Behältnis zwei voneinander separate Sensoreinrichtungen verwenden zu müssen, mit relativ hohem vorrichtungstechnischem Aufwand verbunden.

Aus der DE 102010000034 A1 sind bereits eine Vorrichtung und ein Verfahren zur Bestimmung des Füllstandes einer Flüssigkeit und Abfüllanlage zum Abfüllen von Flüssigkeiten in Behälter bekannt. Eine mit einem Mikrowellensender verbundene Richtantenne richtet von dem Mikrowellensender emittierte Mikrowellenstrahlung auf den Behälter. Ein Mikrowellenempfänger erfasst von dem Medium in dem Behälter reflektierte und/oder transmittierte Mikrowellenstrahlung, woraus eine Auswerteeinheit einen Füllstand der Flüssigkeit in dem Behälter ableitet.

### Offenbarung der Erfindung

Ausgehend von dem dargestellten Stand der Technik liegt der Erfindung die Aufgabe zugrunde, eine Vorrichtung zum Befüllen von Behältnissen nach dem Oberbegriff des Anspruchs 1 derart weiterzubilden, dass die oben genannten Nachteile des Standes der Technik vermieden werden. Diese Aufgabe wird erfindungsgemäß bei einer Vorrichtung zum Befüllen von Behältnissen mit den Merkmalen des Anspruchs 1 dadurch gelöst, dass die Laserstrahlquelle zum Ausbilden eines Flächenstrahls ausgebildet ist. Unter einem Flächenstrahl wird dabei ein Laserstrahl verstanden, dessen Querschnitt nicht rund ausgebildet ist, sondern rechteckförmig, wobei dessen Breite wenigstens so breit ist wie das Behältnis an der zu durchstrahlenden Stelle. Die Verwendung eines derartigen Laserstrahls hat den Vorteil, dass der Durchmesser beispielsweise des kompletten Halsbereichs des Behältnisses durchleuchtet und zur Bewertung herangezogen wird. Es wird somit insbesondere die Strahlungsintensität eines Laserstrahls ausgewertet, der über den gesamten Durchmesser des Behältnishalses durch das Behältnis strahlt, wodurch das erzeugte Signal wesentlich unabhängiger von eventuellen Fehlstellen, Kratzern oder ähnlichem Qualitätseinbußen am Behältnis ist. Dadurch werden Fehlmessungen vermieden, die ansonsten zu Fehlbefüllungen der Behältnisse führen können. Die Erfassung des Flächenstrahls benötigt darüber hinaus lediglich einen einzigen Sensor, der relativ kompakt ausgebildet sein kann, und fluchtend zum Behältnis auf der dem Eintrittsbereich des Flächenstrahls in das Behältnis gegenüberliegenden Seite des Behältnisses angeordnet werden kann. Dadurch lässt sich insbesondere beim Einsatz einer Vielzahl von nebeneinander angeordneten Sensoreinrichtungen ein relativ kompakter Aufbau der Prüfeinrichtung erzielen. Ein weiterer wesentlicher Vorteil ist, dass die Ausrichtung des Laserstrahls zur Längsachse des Behältnisses relativ unkritisch ist, so dass beispielsweise keine Verstelleinrichtung erforderlich ist, die den Laserstrahl mittig zur Längsachse des Behältnisses ausrichtet.

Vorteilhafte Weiterbildungen der erfindungsgemäßen Vorrichtung zum Befüllen von Behältnissen sind in den Unteransprüchen aufgeführt. In den Rahmen der Erfindung fallen sämtliche Kombinationen aus zumindest zwei von in den Ansprüchen, der Beschreibung und/oder den Figuren offenbarten Merkmalen.

Zur Verbesserung der Messqualität bzw. der Vermeidung von Fehlmessungen wird darüber hinaus vorgeschlagen, dass auf der der Laserstrahlquelle zugewandten Seite des Behältnisses eine Blende angeordnet ist. Dadurch wird für das Sensorelement dasjenige Licht des Flächenstrahls ausgeblendet, das seitlich am Behältnis vorbeistrahlt und das Behältnis nicht durchquert.

Eine weitere vorteilhafte Ausgestaltung der Erfindung sieht vor, dass auf der der Laserstrahlquelle abgewandten Seite des Behältnisses eine Blende angeordnet ist, wobei diese sich in Höhe einer Fokusebene bzw. eines Fokusses befindet. Diese Ausgestaltung macht sich die Tatsache zunutze, dass beim Vorhandensein einer klaren Flüssigkeit (d.h. einer Flüssigkeit mit zumindest im Wesentlichen ohne Partikeln) das das Behältnis durchstrahlende Laserlicht sich in einer Fokusebene fokussiert. Es genügt somit durch eine entsprechende Anordnung und Ausgestaltung der Blende sicherzustellen, dass das Sensorelement den Bereich des Fokusses erfasst, um daraus den steigenden Füllpegel der Flüssigkeit zu erkennen. Für den Fall, dass Suspensionen in die Behältnisse eindosiert werden, findet beim Erreichen des Niveaus des Flächenstrahls durch den Füllpegel eine drastische Strahlungsverminderung an der weiteren Blende statt, die von dem Sensorelement erfasst und ausgewertet wird.

Wichtig für eine korrekte Messung des Füllpegels ist es, dass der Flächenstrahl parallel zum Füllpegel bzw. senkrecht zur Längsachse des Behältnisses ausgerichtet ist. In diesem Fall wird beim Durchqueren des Flächenstrahls durch den ansteigenden Füllpegel am Sensorelement eine stark ansteigende Flanke im Messsignal erzeugt, aus der eindeutig auf den Füllpegel geschlossen werden kann.

Um eine einfache Anpassbarkeit einer Prüfeinrichtung an unterschiedlichste Behältnisse sowie unterschiedliche Füllmengen zu ermöglichen, ist es darüber hinaus vorgesehen, dass der Flächenstrahl hinsichtlich seines Höhenniveaus mittels einer Höhenverstelleinrichtung veränderbar angeordnet werden kann.

Die Erfindung ist geeignet zum Befüllen von flüssigen Pharmazeutika in Behältnisse, wobei die Pharmazeutika als klare Flüssigkeit oder in Form einer Suspension vorliegen können. Im Falle einer Suspension ist zu beachten, dass, im Gegensatz zu einer klaren Flüssigkeit, die Laserstrahlen sich nicht in einem Fokus konzentrieren, sondern beliebig im Raum gestreut werden.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine schematische Darstellung einer erfindungsgemäßem Füllvorrichtung für pharmazeutische Behältnisse in Seitenansicht,
- Fig. 2: eine perspektivische Ansicht auf eine Prüfvorrichtung zur Erfassung der Füllpegel an Behältnissen, wie sie bei der Füllvorrichtung gemäß Fig. 1 verwendet wird,
- Fig. 3: einen Querschnitt durch den Bereich der Prüfeinrichtung gemäß Fig. 2 im Bereich eines Behältnisses, wenn dieses mit einer klaren Flüssigkeit befüllt wird, und
- Fig. 4: die Anordnung gemäß Fig. 2, wenn das Behältnis mit einer Suspension befüllt wird.

Gleiche Elemente bzw. Elemente mit der gleichen Funktion sind in den Figuren mit den gleichen Bezugsziffern versehen.

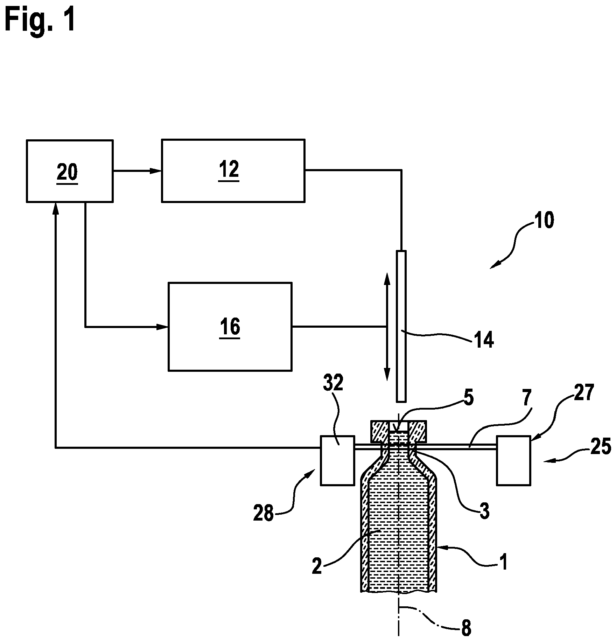

In der Fig. 1 ist eine Vorrichtung 10 zum Befüllen von pharmazeutischen Behältnissen 1, wie Fläschchen, Vials, Ampullen oder ähnlichem dargestellt, die vorzugsweise aus Glas bestehen. Die Vorrichtung 10 umfasst eine Fülleinrichtung 12 mit wenigstens einer, in der Praxis üblicherweise jedoch mehreren heb- und senkbaren Füllnadeln 14, deren Bewegung von einer Antriebsvorrichtung 16 erzeugt wird. Die Fülleinrichtung 12 und die Antriebsvorrichtung 16 werden von einer Steuereinrichtung 20 der Vorrichtung 10 angesteuert. Zum Abfüllen eines flüssigen Pharmazeutikums 2, das in Form einer klaren Flüssigkeit oder in Form einer Suspension vorliegen kann, tauchen die Füllnadeln 14, von denen in der Fig. 1 lediglich eine Füllnadel 14 erkennbar ist, in an sich bekannter Art und Weise in das Behältnis 1 ein und werden beim Abgeben eines Füllstrahls durch die Füllnadeln 14 nach und nach aus den Behältnissen 1 wieder angehoben, wobei sich das dem Füllpegel 5 der Flüssigkeit zugewandte Ende der Füllnadeln 14 vorzugsweise stets in einem geringen Abstand oberhalb der Füllpegel 5 der Flüssigkeit befindet. Die Abfüllung des Pharmazeutikums 2 durch die Fülleinrichtung 12 wird von der Steuereinrichtung 20 beendet, sobald der jeweilige Füllpegel 5 im Bereich des Behältnishalses 2 ein bestimmtes Niveau erreicht hat. Danach findet ggf. aufgrund der Trägheiten des Systems noch ein Nachbefüllen mit einer bekannten Nachfüllmenge statt. Um zu erkennen, ob der Füllpegel 5 das definierte Niveau erreicht hat, weist die Vorrichtung 10 eine Prüfeinrichtung 25 auf.

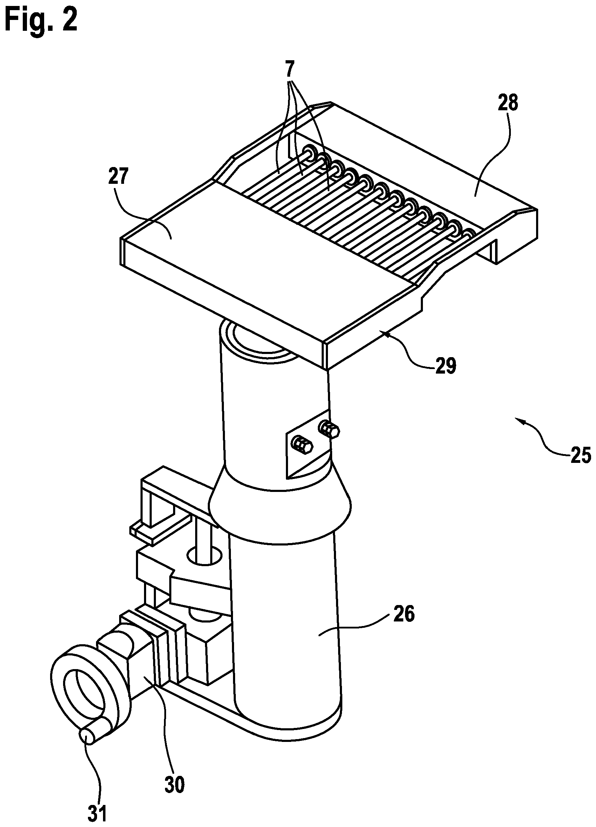

Wie anhand der Fig. 2 zu erkennen ist, umfasst die Prüfeinrichtung 25 einen säulenartigen Träger 26, der an seinem oberen Bereich eine Sendeeinheit 27 und davon beabstandet eine Empfangseinheit 28 aufweist. Die Sendeinheit 27 und die Empfangseinheit 28 sind in einem gemeinsamen Gehäuse 29 angeordnet, das die Sendeeinheit 27 zur Empfangseinheit 28 ausrichtet. Ferner ist am Träger 26 eine Höhenverstelleinrichtung 30 mit einem Handrad 31 angeordnet, mittels der das Niveau der Sendeeinheit 27 und der Empfangseinheit 28 an unterschiedliche Behältnisformate bzw. Füllmengen angepasst werden kann.

Die Prüfeinrichtung 25 dient der gleichzeitigen Überwachung der Füllpegel 5 an einer Vielzahl von Behältnissen 1, im dargestellten Ausführungsbeispiel der Überwachung von Füllpegeln 5 an zwölf Behältnissen 1. Die Prüfeinrichtung 25 erzeugt vorzugsweise mittels einer gemeinsamen, nicht dargestellten Laserstrahleinrichtung zwölf separate Laserstrahlen in Form von Flächenstrahlen 7, die von der Sendeeinheit 27 ausgestrahlt werden. Die von der Sendeeinheit 27 parallel zueinander ausgestrahlten Flächenstrahlen 7 werden von im Bereich der Empfangseinheit 28 angeordneten zwölf Sensoren 32 erfasst. Die Sensoren 32 sind wiederum mit der Steuereinrichtung 20 der Vorrichtung 10 verbunden.

Wie am besten anhand einer Zusammenschau der Fig. 1 und 2 erkennbar ist, werden die zwölf Behältnisse 1 mit ihren Behältnishälsen 3 derart zwischen der Sendeeinheit 27 und der Empfangseinheit 28 angeordnet, dass die Flächenstrahlen 7 die Behältnisse 1 auf einem Höhenniveau durchstrahlen, das einem bestimmten Füllpegel 5 entspricht, bei dem die Steuereinrichtung 20 den Füllvorgang durch die Fülleinrichtung 12 stoppt. Die Flächenstrahlen 7 sind senkrecht zu den Längsachsen 8 bzw. parallel zu den Füllpegeln 5 der Behältnisse 1 ausgerichtet und weisen vorzugsweise jeweils eine Breite auf, die mindestens dem Durchmesser der Behältnishälse 3 entspricht.

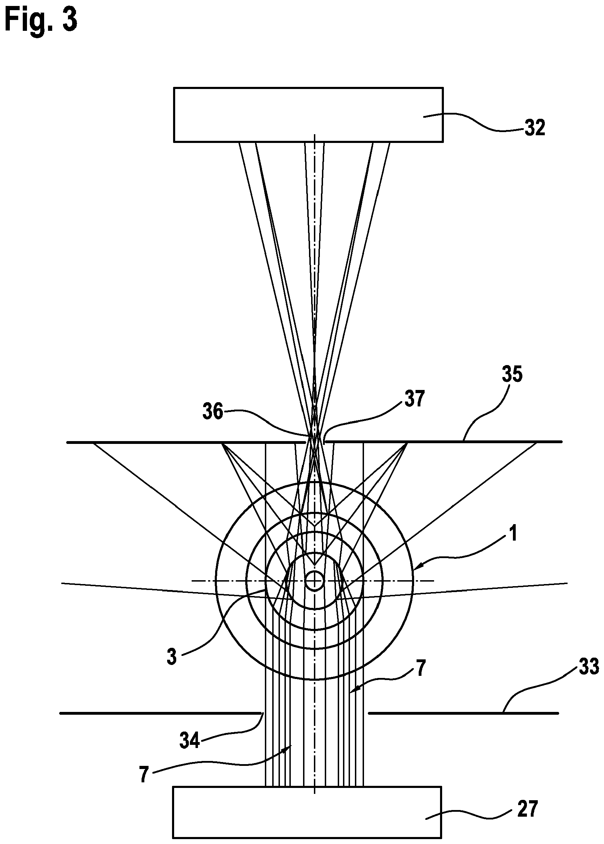

Wie aus der Fig. 3 erkennbar ist, sind im Austrittsbereich der Flächenstrahlen 7 aus der Sendeeinheit 27 Blenden 33 angeordnet, deren Öffnungen 34 derart dem Durchmesser des Behältnishalses 3 angepasst sind, dass die Flächenstrahlen 7 lediglich den Querschnitt der Behältnishälse 3 durchstrahlen, jedoch kein Laserlicht seitlich an den Behältnishälsen 3 vorbeistrahlt. Dadurch wird auch kein seitlich an den Behältnishälsen 3 vorbeigestrahltes Laserlicht von dem jeweiligen Sensor 32 erfasst. Weiterhin ist die Größe der Öffnungen 34 derart gewählt, dass die Behältnishälse 3 vorzugsweise über ihren gesamten Querschnitt von den Flächenstrahlen 7 durchstrahlt werden.

Für den Fall, dass das Pharmazeutika 2, dass in die Behältnisse 1 eindosiert wird, als klare Flüssigkeit vorliegt, ist es darüber hinaus erfindungsgemäß vorzugsweise vorgesehen, dass auf der der Blende 33 gegenüberliegenden Seite der Behältnisse 1 jedem Behältnis 1 eine weitere Blende 35 zugeordnet ist, die im Bereich eines Fokuspunktes 36 eine Öffnung 37 aufweist, wie dies in der Fig. 3 dargestellt ist. Es wird sich dabei der Umstand zunutze gemacht, dass für den Fall, bei dem der Füllpegel 5 sich in Höhe des Flächenstrahls 7 befindet, ein Großteil der Strahlung des Flächenstrahls 7 in dem Fokuspunkt 36 fokussiert wird. Somit wird mittels der weiteren Blende 35 es ermöglicht, dass der Sensor 32 einen deutlichen Intensitätsunterschied wahrnimmt, sobald der Füllpegel 5 das Niveau des Flächenstrahls 7 erreicht, da in diesem Fall die von dem Sensor 32 erfasste Intensität deutlich zunimmt und das seitlich an der Öffnung 37 befindliche Laserlicht nicht erfasst wird.

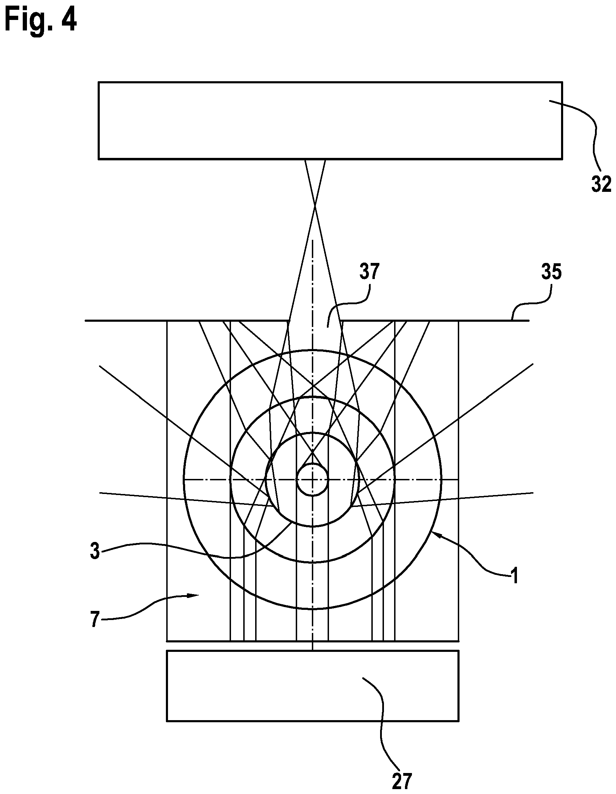

Für den Fall, dass das Pharmazeutika 2, das in die Behältnisse 1 eindosiert wird, in Form einer Suspension (Flüssigkeit mit kleinen Festkörperpartikeln) vorliegt, weist die Prüfeinrichtung 25 ebenfalls auf der der Blende 33 gegenüberliegenden Seite der Behältnisse 1 für jedes Behältnis 1 eine weitere Blende 35 auf. Wesentlich dabei ist, dass das den Behältnishals 3 durchstrahlende Licht in unterschiedlichste Richtungen gebrochen wird. Insbesondere findet dabei, im Gegensatz zu klaren Flüssigkeiten, keine Fokussierung des Laserlichts in einem Fokuspunkt 36 statt. Dies hat zur Folge, dass beim Erreichen des Flächenstrahls 7 durch den Füllpegel 5 nur noch eine ganz geringere Anzahl der Strahlen des Flächenstrahls 7 die weitere Blende 35 passiert. Diese Strahlungsintensität ist wesentlich geringer als die Strahlungsintensität vor dem Erreichen des Flächenstrahls 7 durch den Füllpegel 5. Diese Strahlungsabschwächung macht sich in einem geringeren Signal an dem Sensorelement 32 bemerkbar und wird als Kriterium für den Füllpegel 5 herangezogen. Dieser Fall ist in der Fig. 4 dargestellt.

Die soweit beschriebene Vorrichtung 10 bzw. deren Prüfeinrichtung 25 können in vielfältiger Art und Weise abgewandelt bzw. modifiziert werden, ohne vom Erfindungsgedanken abzuweichen. Dieser besteht in der Verwendung von Flächenstrahlen 7 zur Kontrolle des Füllpegels 5 bei mit einem flüssigen Pharmazeutika befüllten Behältnissen 1.

## Patentansprüche

1. Vorrichtung (10) zum Befüllen von Behältnissen (1), mit einer Fülleinrichtung (12), die eine Flüssigkeit in ein zu befüllendes Behältnis (1) abgibt, wobei der Füllpegel (5) der Flüssigkeit mittels einer Prüfeinrichtung (25) erfassbar ist, und wobei die Prüfeinrichtung (25) eine Laserstrahlquelle (27) umfasst, die beim Befüllen einen Laserstrahl auf das Behältnis (1) richtet, der das Behältnis (1) durchdringt, und der auf der der Laserstrahlquelle (27) gegenüberliegenden Seite des Behältnisses (1) mittels wenigstens eines Sensorelements (32) erfasst wird,
**dadurch gekennzeichnet,**
**dass** der auf das Behältnis (1) gerichtete Laserstrahl als Flächenstrahl (7) ausgebildet ist.

2. Vorrichtung nach Anspruch 1,
**dadurch gekennzeichnet,**
**dass** dem Behältnis (1) ein einziges Sensorelement (32) zugeordnet ist.

3. Vorrichtung nach Anspruch 1 oder 2,
**dadurch gekennzeichnet,**
**dass** auf der der Laserstrahlquelle (27) zugewandten Seite des Behältnisses (1) eine Blende (33) mit einer Öffnung (34) angeordnet ist.

4. Vorrichtung nach Anspruch 3,
**dadurch gekennzeichnet,**
**dass** die Öffnung (34) der Blende (33) dem Durchmesser des Behältnisses (1) in dessen Behältnishals (3) anpassbar und mit dem Behältnishals (3) ausgerichtet ist.

5. Vorrichtung nach einem der Ansprüche 1 bis 4,
**dadurch gekennzeichnet,**
**dass** bei der Prüfung des Füllpegels (5) bei klaren Flüssigkeiten oder bei Suspensionen auf der der Laserstrahlquelle (27) abgewandten Seite des Behältnisses (1) eine weitere Blende (35) angeordnet ist.

6. Vorrichtung nach Anspruch 5,
**dadurch gekennzeichnet,**
**dass** die weitere Blende (35) eine Öffnung (39) im Bereich eines Fokuspunktes (36) des Flächenstrahls (7) aufweist.

7. Vorrichtung nach einem der Ansprüche 1 bis 6,
**dadurch gekennzeichnet,**
**dass** der Flächenstrahl (7) parallel zum Füllpegel (5) bzw. senkrecht zu einer Längsachse (8) des Behältnisses (1) ausgerichtet ist.

8. Vorrichtung nach einem der Ansprüche 1 bis 7,
**dadurch gekennzeichnet,**
**dass** der Flächenstrahl (7) auf den Bereich eines im Querschnitt runden Behältnishalses (3) gerichtet ist.

9. Vorrichtung nach Anspruch 8,
**dadurch gekennzeichnet,**
**dass** eine Höhenverstelleinrichtung (30) für den Flächenstrahl (7) vorgesehen ist.

10. Verwendung einer Vorrichtung (10) nach einem der Ansprüche 1 bis 9 zum Befüllen von flüssigen Pharmazeutika (2), wobei die Pharmazeutika (2) als klare Flüssigkeit oder in Form einer Suspension vorliegen.

## Claims

1. Arrangement (10) for filling containers (1), with a filling device (12) which dispenses a liquid into a container (1) to be filled, wherein the filling level (5) of the liquid is detectable by means of a testing device (25), and wherein the testing device (25) comprises a laser beam source (27) which, during the filling procedure, directs a laser beam onto the container (1), said laser beam passing through the container (1) and being detected on that side of the container (1) opposite the laser beam source (27) by means of at least one sensor element (32), **characterized in that** the laser beam directed onto the container (1) is shaped as a planar beam (7).

2. Arrangement according to Claim 1, **characterized in that** a single sensor element (32) is assigned to the container (1).

3. Arrangement according to Claim 1 or 2, **characterized in that** a diaphragm (33) with an opening (34) is arranged on that side of the container (1) facing towards the laser beam source (27).

4. Arrangement according to Claim 3, **characterized in that** the opening (34) of the diaphragm (33) is adaptable to the diameter of the container (1), in the container neck (3) thereof, and is aligned with the container neck (3).

5. Arrangement according to one of Claims 1 to 4, **characterized in that**, when testing the filling level (5) in the case of clear liquids or in the case of suspensions, a further diaphragm (35) is arranged on that side of the container (1) facing away from the laser beam source (27).

6. Arrangement according to Claim 5, **characterized in that** the further diaphragm (35) has an opening (39) in the area of a focal point (36) of the planar beam (7).

7. Arrangement according to one of Claims 1 to 6, **characterized in that** the planar beam (7) is aligned parallel to the filling level (5) or perpendicular to a longitudinal axis (8) of the container (1).

8. Arrangement according to one of Claims 1 to 7, **characterized in that** the planar beam (7) is directed onto the area of a container neck (3) of round cross section.

9. Arrangement according to Claim 8, **characterized in that** a height-adjusting device (30) is provided for the planar beam (7).

10. Use of an arrangement (10) according to one of Claims 1 to 9 for filling liquid pharmaceuticals (2), wherein the pharmaceuticals (2) are present as a clear liquid or in the form of a suspension.

## Revendications

1. Dispositif (10) destiné au remplissage de récipients (1), avec un mécanisme de remplissage (12) qui délivre un liquide dans un récipient (1) à remplir, où le niveau de remplissage (5) du liquide peut être déterminé au moyen d'un mécanisme de contrôle (25), et où le mécanisme de contrôle (25) comprend une source de rayon laser (27) qui dirige un rayon laser sur le récipient (1) lors du remplissage, lequel rayon laser traverse le récipient (1) et est détecté sur la face du récipient (1) étant opposée à la source de rayon laser (27), au moyen d'au moins un élément détecteur (32), **caractérisé en ce que**
le rayon laser dirigé sur le récipient (1) est conçu sous la forme d'un rayon de surface (7).

2. Dispositif selon la revendication 1,
**caractérisé en ce que**
un seul élément détecteur (32) est associé au récipient (1).

3. Dispositif selon la revendication 1 ou 2,
**caractérisé en ce que**
un cache (33) doté d'une ouverture (34) est disposé sur la face du récipient (1) faisant face à la source de rayon laser (27).

4. Dispositif selon la revendication 3,
**caractérisé en ce que**
l'ouverture (34) du cache (33) peut être adaptée au diamètre du récipient (1), au niveau du col du récipient (3) et est alignée avec le col du récipient (3).

5. Dispositif selon l'une des revendications 1 à 4,
**caractérisé en ce que**
un autre cache (35) est disposé sur la face du récipient (1) étant opposée à la source de rayon laser (27) lors de la vérification du niveau de remplissage (5), quand il s'agit de liquides clairs ou de suspensions.

6. Dispositif selon la revendication 5,
**caractérisé en ce que**
l'autre cache (35) présente une ouverture (39) au niveau d'un point de focalisation (36) du rayon de surface (7).

7. Dispositif selon l'une des revendications 1 à 6,
**caractérisé en ce que**
le rayon de surface (7) est aligné parallèlement au niveau de remplissage (5), respectivement à la verticale d'un axe longitudinal (8) du récipient (1).

8. Dispositif selon l'une des revendications 1 à 7,
**caractérisé en ce que**
le rayon de surface (7) est dirigé sur la zone d'un col de récipient (3), lequel est arrondi dans sa coupe transversale.

9. Dispositif selon la revendication 8,
**caractérisé en ce que**
un mécanisme de réglage de la hauteur (30) est prévu pour le rayon de surface (7).

10. Utilisation d'un dispositif (10) selon l'une des revendications 1 à 9, lequel est destiné au remplissage de produits pharmaceutiques (2) liquides, les produits pharmaceutiques (2) se présentant sous la forme d'un liquide clair ou d'une suspension.
